Europäisches Patentamt

**European Patent Office**

**Office européen des brevets**

(19)

(11) Numéro de publication: **0 080 546**
**A1**

(12) # DEMANDE DE BREVET EUROPEEN

(21) Numéro de dépôt: **81810471.3**

(22) Date de dépôt: **27.11.81**

(51) Int. Cl.³: **F 16 L 41/08**

(43) Date de publication de la demande:
**08.06.83 Bulletin 83/23**

(84) Etats contractants désignés:
**AT BE CH DE FR GB IT LI LU NL SE**

(71) Demandeur: **PABRECO S.A.**
**2, Rte Mgr. Besson**
**CH-1700 Fribourg(CH)**

(72) Inventeur: **Mattes, Rolf**
**8, Rte Mgr Besson**
**CH-1700 Fribourg(CH)**

(74) Mandataire: **Moinas, Michel**
**c/o Moinas & Cie Case Postale 88 5, rue Saint-Léger**
**CH-1211 Genève 4(CH)**

(54) **Procédé de réalisation d'un branchement pour fluide et élément de branchement.**

(57) Le procédé et l'élément de branchement impliquent le perçage de la paroi.

L'élément comprend une pièce cylindrique creuse (2) prenant place dans le trou ménagé dans la paroi (1) et sensiblement au diamètre dudit trou, l'extrémité (2a) de cette pièce (2), du côté intérieur à la paroi (1), étant biseautée vers l'extérieur, puis, intérieurement à la pièce (2) et libre en glissement vis-à-vis de celle-ci, un tube creux (3) fait en un matériau plus dur que celui de la pièce (2) et présentant successivement, du côté intérieur vers le côté extérieur de la paroi (1), une extrémité évasée (3a) prenant appui sur l'extrémité biseautée (2a) de la pièce (2), une partie lisse et une partie terminale filetée (3c), et enfin un écrou (4).

Par vissage de l'écrou (4) sur la partie filetée (3c) du tube (3) ce dernier se déplace vers l'extérieur, ce qui déforme l'extrémité biseautée (2a) de la pièce (2), vient l'écraser contre l'intérieur de la paroi (1) et assure l'étanchéité.

FIG.2

EP 0 080 546 A1

Croydon Printing Company Ltd.

PROCEDE DE REALISATION D'UN BRANCHEMENT
POUR FLUIDE ET ELEMENT DE BRANCHEMENT

La présente invention a trait à un procédé de réalisation d'un branchement pour fluide, de même qu'à un élément de branchement pour la mise en oeuvre d'un procédé. L'invention s'applique aussi bien au branchement de conduite, canalisation et autre tuyau dans lesquels circule un fluide, qu'à un récipient où le fluide se trouve à l'état statique, tels que les fûts, les tonneaux, etc.

Le branchement d'une conduite, surtout lorsque celle-ci est déjà posée et en service , est une opération relativement compliquée. Après avoir arrêté la circulation du fluide, il convient généralement de scier la conduite en deux endroits, de manière à en retirer la portion destinée à laisser la place à l'embranchement. On positionne ensuite celui-ci, qu'on raccorde aux deux extrémités libres de la conduite, les aboutements étant généralement effectués par soudage.

L'invention au contraire est d'une extrême simplicité et permet de réaliser des branchements sur des conduites en service, sans autre complication que de devoir interrompre momentanément la circulation du fluide. Elle a trait d'abord à un procédé de branchement, par perçage d'une paroi, dans lequel on enfile dans le trou ménagé dans la paroi une pièce creuse cylindrique sensiblement au diamètre du trou et dont l'extrémité, du côté intérieur à la paroi, est biseauté vers l'extérieur. Cette pièce comprend intérieurement, libre en glissement, un tube creux en un matériau plus dur que celui de la pièce cylindrique, lequel présente successivement, depuis le côté intérieur vers le côté extérieur de la paroi, une extrémité évasée prenant appui sur l'extrémité biseautée de la pièce, une partie lisse et une partie terminale filetée. On déplace, vers l'extérieur par rapport à la paroi, le tube creux intérieur à la pièce cylindrique par vissage d'un écrou sur la partie filetée dudit tube, jusqu'à ce que l'extrémité biseautée de la pièce, repoussée par l'extrémité évasée du tube, vienne par déformation buter et s'écraser contre l'intérieur de la paroi, assurant l'étanchéité.

L'invention a trait ensuite à un élément de branchement pour fluide, par perçage d'une paroi. Cet élément comprend :

    - une pièce cylindrique creuse prenant place dans le trou ménagé dans la paroi et sensiblement au diamètre dudit trou, l'extrémité de cette pièce, du côté intérieur à la paroi, étant biseautée vers l'extérieur,

    - intérieurement à la pièce et libre en glissement vis à vis de celle-ci, un tube creux fait en un matériau plus dur que celui de la pièce et présentant successivement, du côté intérieur vers le côté extérieur de la paroi, une extrémité évasée prenant appui sur l'extrémité biseautée de la pièce, une partie lisse et une partie terminale filetée,

    - un écrou, en sorte que, par vissage de l'écrou sur la partie filetée du tube, ce dernier se déplace vers l'extérieur, ce qui déforme l'extrémité biseautée de la pièce, vient l'écraser contre l'intérieur de la paroi et assure l'étanchéité.

En variante, l'élément comprend des joints auxiliaires destinés, s'il y a lieu, à parfaire l'étanchéité entre la pièce et la paroi, à l'intérieur comme à l'extérieur, entre la pièce et son écrou ou encore entre la pièce et le tube intérieur. On notera cependant qu'en règle générale la pression exercée par la partie évasée des tubes contre l'extrémité biseautée de la pièce, pression qui se traduit par une déformation importante de cette dernière, suffit à elle seule à assurer l'étanchéité.

L'invention sera mieux comprise en référence au dessin annexé.

La figure 1 est une vue en coupe, à l'exception de la partie gauche du filetage, de la pièce enfilée dans la paroi d'un tube, avant serrage.

La figure 2, elle aussi pour partie en coupe, correspond à la figure 1, après serrage de l'écrou.

La figure 3 est analogue à la figure 2, à ceci près qu'elle représente une variante avec joints.

La figure 4 est une vue correspondant à la figure 2, mais en coupe transversale.

La figure 5 est une vue en coupe transversale d'un tube qui a été préalablement déformé, de manière à ce que l'élément de branchement ne déborde pas trop vers l'intérieur.

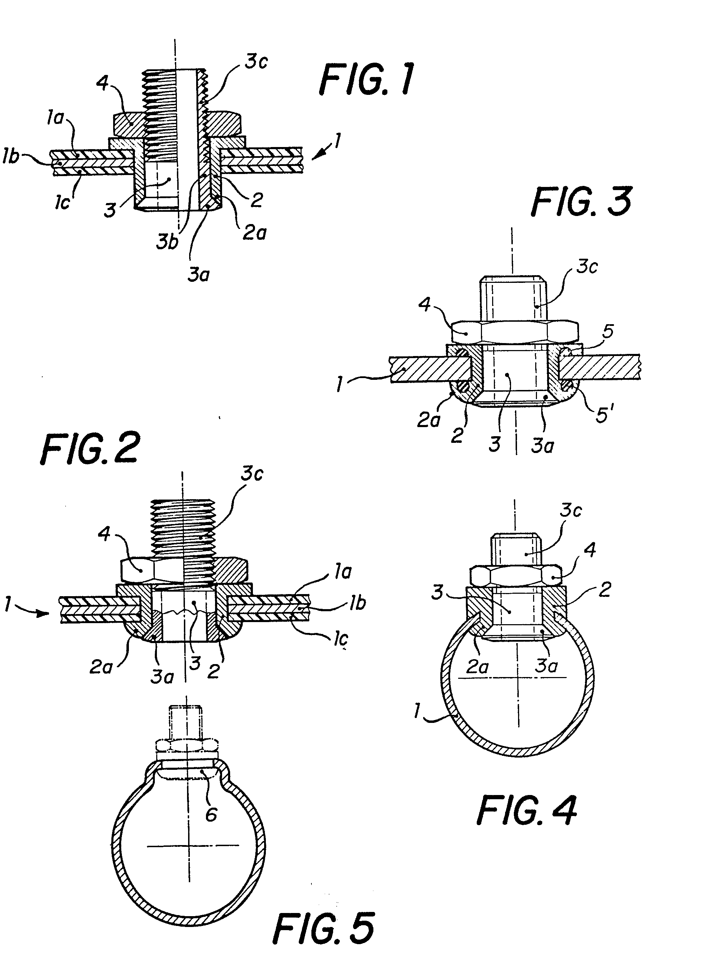

Les figures 1 et 2 expliquent clairement quelle est la constitution de l'élément de branchement, tout en démontrant la simplicité de mise en place. On a bien sûr réalisé tout d'abord un trou dans la paroi 1 d'un tube. Ici, cette paroi 1 est composite et constituée de trois couches successives, à savoir une couche plastique extérieure 1a, puis une âme métallique 1b et enfin une couche intérieure plastique 1c. On place alors l'élément de branchement dans le trou, élément qui se compose d'une pièce 2 dont l'extrémité 2a intérieure au tube est biseautée. Dans cette pièce 2, libre en glissement, se trouve un tube intérieur 3, fait d'un matériau plus dur que celui de la pièce 2. Ce tube 3 comprend une extrémité évasée 3a qui prend appui sur l'extrémité biseautée 2a de la pièce, une partie lisse 3b et une partie terminale filetée 3c.

Ceci réalisé, on enfile sur la partie filetée 3c du tube 3 un écrou 4 qu'on visse de façon à tirer le tube 3 vers l'extérieur. L'extrémité évasée 3a, plus dure que l'extrémité biseautée 2a de la pièce, déforme celle-ci et vient l'écraser contre l'intérieur de la paroi 1.

On voit clairement que le branchement est réalisé, et de façon étanche, par le simple vissage d'un écrou.

Sur la figure 3, on a représenté une pièce 2 garnie de deux joints toriques 5, 5', le joint inférieur 5' étant entraîné dans la déformation de la partie biseautée 2a et venant en contact avec l'intérieur de la paroi 1.

En autres variantes, non représentées sur les figures, on peut également placer des joints toriques dans l'écrou, ou dans l'épaisseur de la partie lisse 3b du tube 3 coulissant dans la pièce 2.

La figure 4, qui est une section perpendiculaire à celle des figures précédentes, illustre également l'élément de branchement monté. Sous cet autre angle, il ne se présente pas très différemment, puisqu'il présente une géométrie grossièrement cylindrique.

Dans la figure 5, on a réalisé, à l'aide d'un outil approprié, une déformation 6 dans la paroi du tube, au niveau du trou qui a été réalisé, afin que l'élément, une fois monté, n'empiète pas sensiblement sur la section de la conduite.

On comprendra aisément que l'invention peut s'appliquer à n'importe quel fluide, aussi bien aux liquides qu'aux gaz, et qu'il est indifférent que celui-ci soit statique ou en circulation. Il convient simplement d'interrompre momentanément la pression lors de la réalisation du trou dans la paroi. On peut ainsi réaliser toutes sortes d'embranchements latéraux, puisqu'il suffit de raccorder une tubulure latérale, par exemple par l'intermédiaire du filetage libre restant sur le tube 3, pour avoir constitué une dérivation. De même, on peut abouter au filetage libre un robinet, utile en particulier lorsqu'on veut prélever un liquide dans un tonneau ou dans un fût.

Vu la simplicité de mise en place, ces embranchements peuvent être multipliés. En outre, tels quels, ils peuvent servir d'embouts pour les perçages multiples d'un tuyau, par exemple d'un tuyau d'arrosage.

L'invention s'applique à tout type de tuyaux, métalliques, minéraux (béton, fibro-ciment) ou plastiques, simples ou composites.

0080546

REVENDICATIONS

1. Procédé de réalisation d'un branchement pour fluide, par perçage d'une paroi, caractérisée en ce qu'on enfile dans le trou ménagé dans la paroi (1) une pièce creuse cylindrique (2) sensiblement au diamètre du trou et dont l'extrémité (2a), du côté intérieur à la paroi, est biseautée vers l'extérieur, cette pièce comprenant intérieurement, libre en glissement, un tube creux (3) en un matériau plus dur que celui de la pièce cylindrique (2), lequel présente successivement, depuis le côté intérieur vers le côté extérieur de la paroi (1), une extrémité évasée (3a) prenant appui sur l'extrémité biseautée (2a) de la pièce (2), une partie lisse (3b) et une partie terminale filetée (3c), puis qu'on déplace, vers l'extérieur par rapport à la paroi (1), le tube creux (3) intérieur à la pièce cylindrique (2) par vissage d'un écrou (4) sur la partie filetée (3c) dudit tube (3) jusqu'à ce que l'extrémité biseautée (2a) de la pièce (2), repoussée par l'extrémité évasée (3c) du tube (3), vienne par déformation buter et s'écraser contre l'intérieur de la paroi (1), assurant l'étanchéité.

2. Procédé selon la revendication 1, caractérisé en ce qu'on déforme la paroi (1) de façon à ménager un espace (6) où vient se loger, sans empiéter sensiblement une fois montées, l'extrémité (2a) déformée de la pièce (2) et l'extrémité (3a) du tube (3).

3. Elément de branchement pour fluide, par perçage d'une paroi, caractérisé en ce qu'il comprend :

   - une pièce cylindrique creuse (2) prenant place dans le trou ménagé dans la paroi (1) et sensiblement au diamètre dudit trou, l'extrémité (2a) de cette pièce (2), du côté intérieur à la paroi (1), étant biseautée vers l'extérieur,

    - intérieurement à la pièce (2) et libre en glissement vis à vis de celle-ci, un tube creux (3) fait en un matériau plus dur que celui de la pièce (2) et présentant successivement, du côté intérieur vers le côté extérieur de la paroi (1), une extrémité évasée (3a) prenant appui sur l'extrémité biseautée (2a) de la pièce (2), une partie lisse (3b) et une partie terminale filetée (3c),

    - un écrou (4) en sorte que, par vissage de l'écrou (4) sur la partie filetée (3c) du tube (3) ce dernier se déplace vers l'extérieur, ce qui déforme l'extrémité biseautée (2a) de la pièce (2), vient l'écraser contre l'intérieur de la paroi (1) et assure l'étanchéité.

4.    Elément de branchement selon la revendication 3, caractérisé en ce qu'il comprend des joints toriques.

5.    Elément de branchement selon la revendication 4, caractérisé en que le joint torique est localisé sur la pièce (2), extérieurement à celle-ci et vers son extrémité biseautée (2a).

6.    Elément de branchement selon la revendication 4, caractérisé en ce que le joint torique est localisé sur la pièce (2) de façon à s'écraser sur l'extérieur de la paroi (1).

7.    Elément de branchement selon la revendication 4, caractérisé en ce que le joint torique est localisé sur la pièce (2), intérieurement à celle-ci et en contact avec la partie lisse (3b) du tube (3).

8.    Elément de branchement selon la revendication 4, caractérisé en ce que le joint torique est localisé sur la
partie lisse (3b) du tube (3).

9.     Elément de branchement selon la revendication 4,
caractérisé en ce que le joint torique est localisé
dans l'écrou (4) de façon à s'évaser contre la pièce (2).

0080546

1/1

FIG. 1

FIG. 3

FIG. 2

FIG. 4

FIG. 5

| Catégorie | Citation du document avec indication, en cas de besoin des parties pertinentes | Revendication concernee | CLASSEMENT DE LA DEMANDE (Int Cl ³) |
|---|---|---|---|
| | **DOCUMENTS CONSIDERES COMME PERTINENTS** | | |
| | DE - C - 262 259 (STONE & CO.) <br> * fig. 1 à 12 * <br> -- | 1,3-6 | F 16 L 41/08 |
| | US - A - 3 841 667 (SANDS) <br> * fig. 1,2 * <br> -- | 1,3,4, 6 | |
| | DE - A1 - 2 639 739 (TIEDT) <br> * page 5, ligne 10 à page 6, ligne 3; <br> fig. 1 à 3 * <br> -- | 1,3 | |
| | US - A - 3 973 789 (KUNZ et al.) <br> * fig. 2,3 * <br> -- | 1,3 | **DOMAINES TECHNIQUES RECHERCHES (Int Cl.³)** <br><br> F 16 L 41/00 |
| | GB - A - 1 409 855 (NITTO KOHKI) <br> * fig. 6,8 * <br> -- | 1 | |
| A | GB - A - 2 051 991 (BRITISH GAS) <br> --- | | |
| A | US - A - 3 949 461 (THASTRUP) <br> -- | | |
| A | FR - A - 2 305 677 (SPIE-BATIGNOLLES) <br> -- | | **CATEGORIE DES DOCUMENTS CITES** <br><br> X particulièrement pertinent |
| A | GB - A - 1 447 796 (ANDERSSON) <br> -- | | A arriere-plan technologique <br> O divulgation non-ecrite <br> P document intercalaire |
| A | GB - A - 1 334 441 (FOGA FORSALJNINGS) <br> -- | | T theorie ou principe a la base de l'invention <br> E demande faisant interference |
| A | US - A - 2 199 271 (SCHAEFER) <br> ----- | | D document cite dans la demande <br> L document cite pour d autres raisons |

& membre de la même famille, document correspondant

Le présent rapport de recherche a été établi pour toutes les revendications

| Lieu de la recherche | Date d achevement de la recherche | Examinateur |
|---|---|---|
| Berlin | 25-01-1982 | SCHLABBACH |

OEB Form 1503.1   06.78